# EUROPEAN PATENT SPECIFICATION

(11) **EP 1 785 712 B1**
(45) Date of publication and mention of the grant of the patent: **25.08.2010**
(21) Application number: 06076817.3
(22) Date of filing: 03.10.2006
(51) Int. Cl.: G01M 1/30, G01M 1/04, G01M 1/36

(54) **A device for relative angular positioning between a rim and a tyre**
Vorrichtung zur relativen Winkelpositionierung zwischen Felge und Reifen
Dispositif pour le positionnement angulaire relatif entre une jante et un pneu

(30) Priority: 10.11.2005 IT MO20050298
(43) Date of publication of application: 16.05.2007
(73) Proprietor: Snap-on Equipment S.r.l., 42015 Correggio (RE) (IT)
(72) Inventor: Spaggiari, Rino, 42015 Correggio (Reggio Emilia) (IT)
(74) Representative: Gotra, Stefano

(56) References cited:
- US-A1- 2004 165 180

## Description

The object of the present invention is a device for angular positioning of a rim with respect to a tyre.

The invention can be usefully applied in combination with a common balancing machine for optimising the balance of a wheel and/or for minimising a wheel run-out.

As is known, imbalance of a wheel essentially depends on the distribution of the mass of the wheel with respect to its rotation axis. If the distribution of the wheel is not homogeneous, during the rotation of the wheel about the axis thereof dynamic actions develop which are substantially equivalent to the dynamic actions produced by the rotation of an eccentric mass set at a determined distance from the rotation axis of the wheel. The balancing of the wheel consists in substance in the determination of the entity of this eccentric mass and its position, which are performed using a common balancing machine, and in the positioning on the rim of one or more masses of a size which will produce an equivalent and opposite action to the imbalance of the wheel.

In balancing wheels destined for high-performance vehicles, i.e. subject to high rotation speeds, an optimisation process is usually followed aimed at obtaining the balancing of the wheel by limiting to a maximum the masses which are applied to the rim in order not to increase the overall mass of the wheel excessively, and therefore the moment of inertia thereof.

This process is done by measuring the imbalance due to the tyre only and the imbalance due to the rim only, and angularly positioning the rim and the tyre in such a way that the two imbalances, though partially, compensate one another. In this way a balancing mass is obviously decidedly smaller than in a case where reciprocal compensation between rim and tyre is not performed.

The measuring of the rim and tyre imbalances is performed by using specific functions of the balancing machines present on the market. Once the measurement is taken on the balancing machine, the positioning of the rim and tyre is performed manually after having removed the wheel from the balancing machine and debeaded the tyre from the rim. As the correct positioning of the rim with respect to the tyre requires various measurements on the balancing machine and various angular repositionings between the rim and the tyre, the overall process of optimisation is rather slow and laborious as the wheel has to be removed and remounted on the balancing machine and the debeading tool several times.

The invention can further be usefully applied in combination with a common balancing machine for minimising the runout defect.

It is also known from US 2004/0165180 an apparatus for vehicle service system which comprises a debeading tool, a shaft for rotating a wheel (rimtyre) assembly and means for blocking rotation of the wheel, all mounted on a common supporting frame in order to perform both measurement of the run-out of the wheel and correction of the angle between the rim and the tyre.

The main aim of the present invention is to provide a device for relative angular positioning between a rim and a tyre which obviates the above-described drawbacks.

An advantage of the device which will be illustrated is that it permits rapid angular positioning of the rim with respect to the tyre.

A further advantage of the device is that is can be associated to a balancing machine in such a way as to enable angular positioning of the rim with respect to the tyre without having to remove the wheel from the balancing machine.

Further characteristics and advantages of the device of the invention will better emerge from the detailed description made herein below with reference to the figures of the drawings, given by way of non-limiting example, and in which:
figure 1 is a perspective view of the device of the present invention associated to a balancing machine;
figure 2 is a different perspective view from the view of figure 1 of the device with the element 9 which substitutes the element 10 of figure 1.

With reference to the figures of the drawings, the device of the invention (denoted by number 1) comprises at least a debeading tool 2, 3 predisposed to debead the tyre 20 from the rim 30. The debeading tool preferably comprises a pair of discs 2, 3 each predisposed on command to enter into contact with a side of the tyre and exert thereon a force which is sufficient to detach the bead of the tyre 20 from the rim 30. The discs 2, 3 are rotatable about inclined axes with respect to the rotation axis x and are preferably idle.

The discs 2,3 are also associated to a motor 4,5 suitable for activating the discs 2, 3 in a sliding motion along directions that are normally not perpendicular (and preferably more or less parallel) to the rotation axis x between at least a position in which the discs 2, 3 are not in contact with the tyre 20 and at least a position in which the discs 2, 3 are in contact with the tyre 20. The discs 2, 3 preferably enter into contact with the beads of the tyre 20 in areas of the tyre 20 which are aligned along a parallel direction to the rotation axis x. In other embodiments, not illustrated, these contacts can be made in non-aligned areas along a same direction which is parallel to the rotation axis x.

As can be seen in the figures, the discs 2, 3 are positioned on opposite sides of the tyre-rim wheel assembly 20, 30. As is known, when a tyre is mounted on a rim, the beads of the tyre are glued to a seating afforded along the external edges of the rim 30. To perform a debeading operation of the tyre 20, the discs 2, 3 are pressed into contact with the sides of the tyre 20 in proximity of the beads. The thrust exerted by the discs 2, 3 on the sides of the tyre nears the beads to one another, causing the detachment thereof from the rim, so that the tyre and the rim are free to rotate reciprocally with respect to the axis x.

In the preferred embodiment of the device, the discs 2, 3 are each mounted on a support block 12, 13 which is solidly constrained to a pair of stems 14, 15 which are slidable in straight guides 17, 18. Each support block is slidable along the straight guides by means of an worm screw - nut screw mechanism 40, 41, in which the worm screw is rotated by a rotary actuator.

The device further comprises means for rotating, predisposed to rotate the rim 30 about a rotation axis x. The means for rotating comprise a support element 6 predisposed to be associated to the rim 30 coaxially to the rotation axis x. The means for rotating further comprise an engaging element 7, predisposed to engage to the rim 30 in rotation about the rotation axis x. A rotary actuator 8, preferably an electric motor, is mechanically associated to the engaging element 7 in order to power rotation thereof about the axis x.

The support element 6 is preferably constituted by a conical or cylindrical element which is positioned at the hub of the rim. The engaging element 7 is constituted by a shaped arm which at an end thereof can be placed in contact with an internal surface 31 of the rim 30. In the illustrated embodiment this internal surface 31 is constituted by the side of a spoke of the rim, but in rims of other types it could be constituted by the lateral surface of any lateral recess or cavity of the rim 30. Preferably the shaped arm comprises a rod 7a, arranged parallel to the rotation axis x of the rims, and by a plate 7b arranged perpendicular to the rod 7a. The plate 7b is rotated about the axis x by the rotary actuator 8 and is slidable in a perpendicular direction to the axis x with respect to the rotary actuator 8 itself. Thus the radial position of the rod 7a can be varied with respect to the axis x so that the rod 7a can be arranged in contact with different internal surfaces 31 of the rim 30.

The debeading of the tyre is performed as follows:
after the wheel has been engaged on the support element 6, the discs 2, 3 are slid towards the tyre 20 and pressed into contact with the sides of the tyre up until the beads are detached from the rim 30. At this point, the discs 2, 3 are kept still in the pressed position against the tyre 20 and the wheel is rotated by the means for rotating 7, 8, 9 so that the tyre is debeaded along the whole circumference of the rim 30.

The device of the invention also comprises means for blocking, predisposed to block the tyre 20 against rotation about a parallel axis to the rotation axis x.

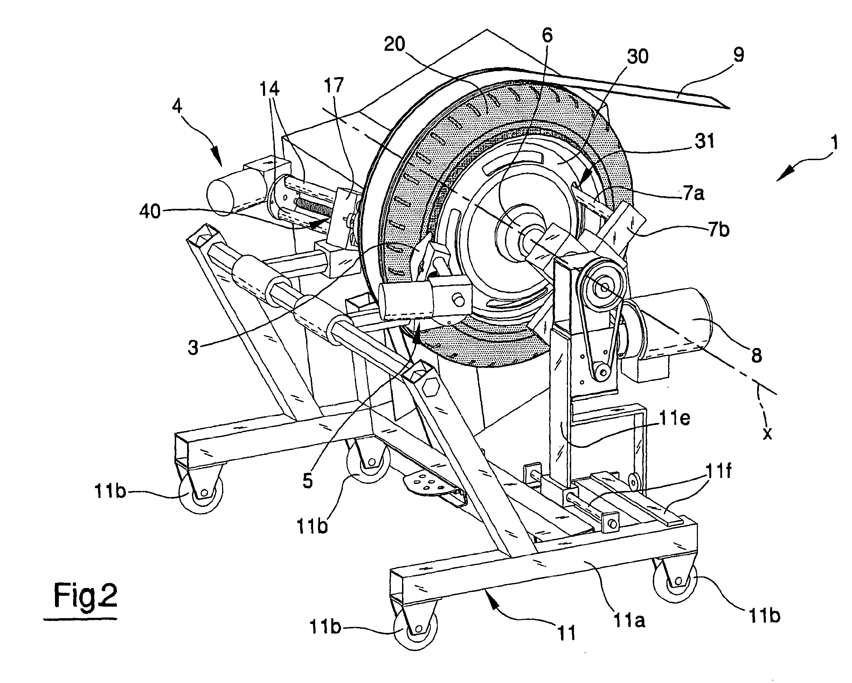

Preferably the means for blocking comprise a brake which is predisposed on command to enter into contact with the tyre 20 and to exert an action in opposition to the rotation of the tyre 20. Ina first embodiment (figure 2) the brake comprises a belt 9 which is fixed at an end thereof with respect to the tyre 20, while at another end thereof it is mobile between a position in which no part of the belt 9 is in contact with the tyre 20 and a position in which at least a tract of the belt 9 is in contact with the tyre tread. The belt 9 functions, in effect, as a belt brake on the tyre 20.

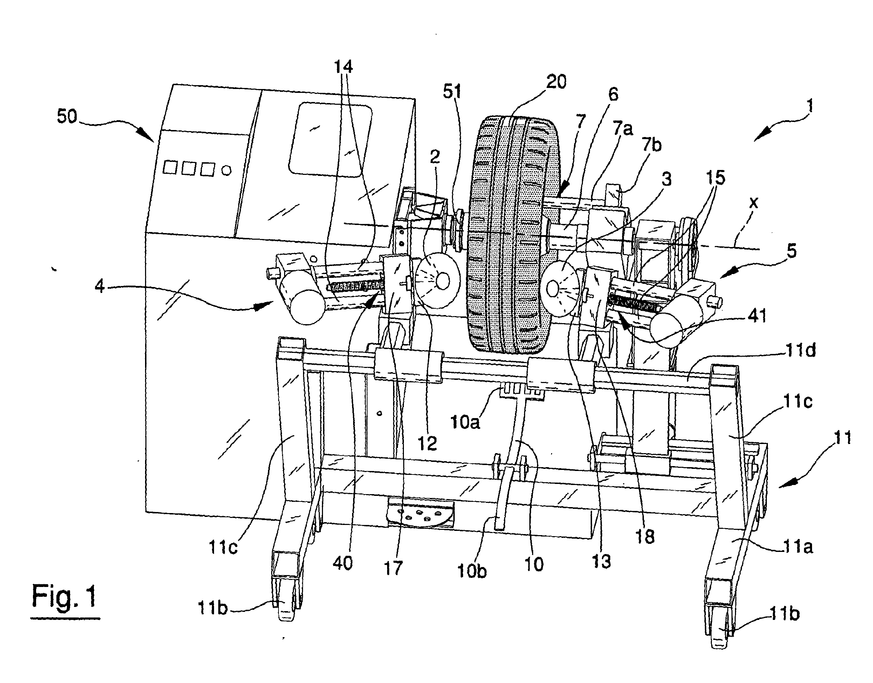

Alternatively (figure 1) the brake comprises a lever 10, provided with a braking end 10a, which oscillates about a fixed fulcrum 11 between a position in which the braking end 10a is not in contact with the tread of the tyre and a position in which the braking end 10a is in contact with the tyre tread. The oscillation of the lever 10 can be manually commanded by acting on the free end 10b. The lever 10 is preferably positioned below the wheel assembly 20, 30 and the fulcrum 11 is arranged in such a way that by pushing the free end 10b of the lever downwards the braking end 10a is raised and goes into contact with the tyre 20 tread.

In a further embodiment the discs 2, 3 are blockable against rotation about the axes thereof. In this embodiment the means for blocking can be constituted by the shaped discs when, pressed into contact with the sides of the debeaded tyre, they are blocked against rotation about the axes thereof. Obviously the need for blocking the discs does not occur in a case of use of different debeading tools, i.e. those not having discs or other mobile elements.

The function of the means for blocking is to enable relative rotation of the rim 30 with respect to the tyre 20. Once the tyre 30 has been debeaded from the rim 20, by acting on the means for blocking the rim 30 can be rotated using the means for rotating 6, 7, 8, while keeping the tyre 20 still.

The debeading tool 2, 3, 4, 5, the means for rotating 6, 7, 8, and the means for blocking 9 or 10 are advantageously associated to a support frame 11. The support frame 11 comprises a base portion 11 a of the frame, which inferiorly can be provided with wheels 11b for facilitating movement of the device. A plurality of uprights are arranged on the base, to which the various components of the device are associated. A pair of uprights 11c, joined to one another by means of a sliding crossbar 11d, support the motor 4, 5 and the discs 2, 3 which are slidable along the crossbar 11d along a parallel direction to the rotation axis x by means of the support arms 21, 22. A third upright 11e supports the means for rotating 6, 7, 8 and is slidable in a parallel direction to the rotation axis x along guides 11f which are solidly constrained to the base portion 11 a of the frame 11.

The frame 11 is associable to a balancing machine 50 provided with a rotating shaft 51 on which the rim 30 can be fixed. The frame 11 can be associated to the balancing machine 50 in such a way that the rotation axis x of the rim 30 is coaxial to the rotating shaft 51 of the balancing machine 50.

The support element 6 cooperates with the rotating shaft 51 of the balancing machine 50 in such a way that the weight of the wheel rim 30 and tyre 20 is entirely supported by the support element 6. The support element 6 preferably engages directly to the free end of the rotating shaft 51 internally of the hub of the rim 30. During the action of the device 1 the rotating shaft 51 is idle and the weight of the wheel is entirely supported by the support element 6, so that the delicate sensors which are connected to the rotating shaft 51 are absolutely protected from all stress factors which might lead to damage thereof.

The frame 11 is preferably provided with wheels 11b for resting the device 1 and moving it. By means of this arrangement the device 1 can be neared and positioned with respect to the balancing machine 50 at the moment of use and distanced once it has performed its function. The frame 11 can however be made mobile with respect to the balancing machine 50 in other ways, for example it could be hinged about a vertical axis for rotating between a use position, in which the support element 6 is constrained to the rotating shaft 51 coaxially to the rotation axis x and a non-use position, in which the support element 6 is separated from the rim 30. The frame 11 could also be vertically mobile by means of a vertical raising system.

The correct positioning of the device 1 with respect to the balancing machine 50, i.e. the correct centring of the support element 6 with respect to the rotation axis x and the rotating shaft 51, can be realised via the use of relatively common centring elements, for example rapid-attachment levers.

With the use of the device of the invention, optimising the wheel balance and/or the run out is easy and fast. Firstly the wheel rim and tyre 20, 30 assembly is mounted on the rotating shaft 51 of the balancing machine 50 for measuring the imbalances due to the tyre 20 only, and to the rim 30 only. In a known way the balancing machine 50 calculates and shows the angular position in which the rim and tyre should be arranged in order to minimise the overall imbalance of the wheel assembly. Following the measurements taken by the balancing machine, and without dismounting the wheel from the rotating shaft 51, the frame 11 is hooked up to the balancing machine 50. When the frame 11 is hooked up to the balancing machine 50, the wheel assembly consisting of the rim 30 and the tyre 20 is supported on one side by the rotating shaft 51 and on the other it is associated to the means for rotating 6, 7, 8 of the device. After placing the rotating shaft 51 in the idle position, and after having deflated the tyre 20, the device first performs the debeading of the tyre 20 from the rim 30 and then, after activating the means for blocking 9, 10 for preventing rotation of the tyre 20 about the rotation axis x, performs a positioning of the rim 30 with respect to the tyre 20 by activating the means for rotating 6, 7, 8. As the connection between the balancing machine and the means for rotating 6, 7, 8 is electrical the activating of the means for rotating can advantageously be commanded directly by the balancing machine on the basis of the measurements taken.

Once the positioning indicated by the balancing machine has been performed, the tyre 30 is re-inflated and the device is removed from the balancing machine 50, which performs a new set of measurements. At the end of this new set of measurements the frame 11 can once more be associated to the balancing machine 50 in order to correct the previously-obtained angular positioning of the rim 30 and tyre 20.

## Claims

1. A device for relative angular positioning between a rim and a tyre, **comprising:**
at least a debeading tool (2, 3, 4, 5), predisposed for debeading the tyre (20) from the rim (30);
means for rotating (6, 7, 8), predisposed for causing a relative rotation between the rim (30) and the tyre (20) about a rotation axis (x);
means for blocking, predisposed to block either the tyre (20) or the rim (30) in rotation about a rotation axis (x).
**characterised in that**
the at least a debeading tool (2, 3, 4, 5), the means for rotating (6, 7, 8) and the means for blocking (9, 10) are supported by a support frame (11) which is associable to a balancing machine (50), which balancing machine (50) is provided with a rotating shaft (51) on which rotating shaft (51) the rim (30) can be fixed, in such a way that the rotation axis (x) of the rim (30) is coaxial to the rotating shaft (51) of the balancing machine (50), wherein the support frame (11) is provided with means for moving and positioning in relation to the balancing machine (50) in such a way that the device (1) can be neared and distanced with respect to the balancing machine (50).

2. The device of claim 1, **characterised in that** the rotation axis (x) is an axis of a rotating shaft of a balancing machine.

3. The device of claim 1 or 2, **characterised in that** the at least a debeading tool comprises a pair of discs (2, 3) each predisposed to be inserted between a bead of the tyre (20) and a rim (30).

4. The device of claim 3, **characterised in that** the discs (2, 3) rotate about inclined axes with respect to the rotation axis (x).

5. The device of at least one of the preceding claims 3 or 4, wherein the discs 2, 3) are idle.

6. The device of at least one of the preceding claims 3-5 wherein the discs (2, 3) are associated to a motor (4, 5) able to slide the discs (2, 3) between at least a position in which the discs are not in contact with the tyre (20) and at least a position in which the discs are in contact with the tyre (20).

7. The device of claim 6, wherein the discs (2, 3) enter into contact with the beads of the tyre (20).

8. The device of claim 6 or 7, wherein the discs (2, 3) enter into contact with the beads of the tyre (20) at areas of the tyre (20) which are aligned along a parallel direction to the rotation axis (x).

9. The device of claim 1, wherein the means for rotating comprise a support element (6) predisposed to be associated to the rim (30) coaxially to the rotation axis (x); an engaging element (7), predisposed to be engaged to the rim (30) in rotation about the rotation axis (x); a rotary actuator (8), mechanically associated to the engaging element (7).

10. The device of claim 1, wherein the means for blocking comprise a brake (9, 10) predisposed to enter on command into contact with the tyre (20).

11. The device of claim 10, wherein the brake (9, 10) comprises a belt (9) which at an end thereof is fixed with respect to the tyre (20) and at another end thereof is mobile between a position in which it is not in contact with the tyre (20) and a position in which at least a tract of the belt (9) is in contact with a tread of the tyre (20).

12. The device of claim 10, therein the brake (9, 10) comprises a lever (10), provided with a bracing end (10a), which lever (10) oscillates about a fixed fulcrum (11) and between a position in which the braking end (10a) is not in contact with the tyre tread and a position in which the braking end (10a) is in contact with the tyre tread (20).

13. The device of at least one of claims from 3 to 9, wherein the means for blocking are constituted by the discs (2, 3), which discs (2, 3) are blockable against rotation about axes thereof.

14. The device of claim **1**, wherein the support element (6) cooperates with the rotating shaft (51) of the balancing machine (50) in such a way that the weight of the wheel (20, 30) is entirely supported by the support element (6).

15. The device of claim **14,** wherein the support element (6) engages directly to the free end of the rotating shaft (51), internally of the hub of the rim (30).

16. The device of at least one of the preceding claims, wherein the support frame (11) comprises a pair of uprights (11c), joined to one another by a sliding crossbar (11d), which support the motor (4, 5) and the discs (2, 3) which are slidable along the crossbar (11d) along a parallel direction to the rotation axis (x) by means of support arms (21, 22).

17. The device of claim **15,** wherein the support frame (11) comprises a third upright (11e) which supports the means for rotating (6, 7, 8) and is slidable in a parallel direction to the rotation axis (x) along guides (11f) which are solidly constrained to the base portion (11a) of the frame (11).

## Patentansprüche

1. Vorrichtung zur relativen Winkelpositionierung zwischen einer Felge und einem Reifen, enthaltend:
- wenigstens ein Entwulstwerkzeug (2, 3, 4, 5), vorgesehen zum Entwulsten des Reifens (20) von der Felge (30);
- Drehmittel (6, 7, 8), vorgesehen zum Erzeugen einer entsprechenden Umdrehung zwischen der Felge (30) und dem Reifen (20) um eine Drehachse (x);
- Blockiermittel, vorgesehen zum Blockieren entweder des Reifens (20) oder der Felge (30) in Umdrehung um eine Drehachse (x),
**dadurch gekennzeichnet, dass**
das wenigstens eine Entwulstwerkzeug (2, 3, 4, 5), die Drehmittel (6, 7, 8) und die Blockiermittel (9, 10) von einem Trägerrahmen (11) getragen sind, der einer Auswuchtmaschine (50) zugeordnet werden kann, welche Auswuchtmaschine (50) mit einer Drehwelle (51) versehen ist, auf welcher Drehwelle (51) die Felge (30) befestigt werden kann, und zwar auf solche Weise, dass die Drehachse (x) der Felge (30) koaxial zu der Drehwelle (51) der Auswuchtmaschine (50) verläuft, wobei der Trägerrahmen (11) mit Mitteln zum Bewegen und Positionieren im Verhältnis zu der Auswuchtmaschine (50) auf solche Weise versehen ist, dass die Vorrichtung (1) im Verhältnis zu der Auswuchtmaschine (50) genähert und entfernt werden kann.

2. Vorrichtung nach Patentanspruch 1, **dadurch gekennzeichnet, dass** die Drehachse (x) eine Achse einer Drehwelle von einer Auswuchtmaschine ist.

3. Vorrichtung nach Patentanspruch 1 oder 2, **dadurch gekennzeichnet, dass** das wenigstens eine Entwulstwerkzeug ein Paar von Scheiben (2, 3) enthält, jede dazu vorgesehen, zwischen einem Wulst des Reifens (20) und einer Felge (30) eingeführt zu werden.

4. Vorrichtung nach Patentanspruch 3, **dadurch gekennzeichnet, dass** sich die Scheiben (2, 3) im Verhältnis zu der Drehachse (x) um geneigte Achsen drehen.

5. Vorrichtung nach wenigstens einem der vorstehenden Patentansprüche 3 oder 4, bei welcher die Scheiben (2, 3) leerlaufend sind.

6. Vorrichtung nach wenigstens einem der vorstehenden Patentansprüche von 2-5, bei welcher die Scheiben (2, 3) einem Motor (4, 5) zugeordnet sind, in der Lage, die Scheiben (2, 3) zu verschieben zwischen wenigstens einer Position, in welcher die Scheiben nicht im Kontakt mit dem Reifen (20) sind, und wenigstens einer Position, in welcher die Scheiben im Kontakt mit dem Reifen (20) sind.

7. Vorrichtung nach Patentanspruch 6, bei welcher die Scheiben (2, 3) mit den Wülsten des Reifens (20) in Kontakt kommen.

8. Vorrichtung nach Patentanspruch 6 oder 7, bei welcher die Scheinen (2, 3) mit den Wülsten des Reifens (20) in Kontakt kommen, und zwar in Bereichen des Reifens (20), welche entlang einer zur der Drehachse (x) parallel verlaufenden Richtung ausgerichtet sind.

9. Vorrichtung nach Patentanspruch 1, bei welcher die Drehmittel enthalten: ein Trägerelement (6), dazu vorgesehen, koaxial zu der Drehachse (x) der Felge (30) zugeordnet zu werden; ein Greifelement (7), dazu bestimmt, die sich um die Drehachse (x) in Umdrehung befindliche Felge (30) zu halten; einen Drehtrieb (8), der mechanisch dem Greifelement (7) zugeordnet ist.

10. Vorrichtung nach Patentanspruch 1, bei welcher die Blockiermittel eine Bremse (9, 10) enthalten, dazu bestimmt, auf einen Befehl hin mit dem Reifen (20) in Kontakt zu kommen.

11. Vorrichtung nach Patentanspruch 10, bei welcher die Bremse (9, 10) einen Riemen (9) enthält, welcher an einem Ende im Verhältnis zu dem Reifen (20) befestigt ist und an seinem anderen Ende beweglich ist zwischen einer Position, in welcher er sich nicht im Kontakt mit dem Reifen (20) befindet, und einer Position, in welcher sich wenigstens ein Abschnitt des Riemens (9) mit einem Abschnitt des Reifens (20) im Kontakt befindet.

12. Vorrichtung nach Patentanspruch 10, bei welcher die Bremse (9, 10) einen Hebel (10) enthält, versehen mit einem bremsenden Ende (10a), welcher Hebel (10) um einen feststehenden Drehpunkt (11) schwingt zwischen einer Position, in welcher das bremsende Ende (10a) sich nicht im Kontakt mit dem Abschnitt des Reifens befindet, und einer Position, in welcher das bremsende Ende (10a) sich im Kontakt mit dem Abschnitt des Reifens (20) befindet.

13. Vorrichtung nach wenigstens einem der Patentansprüche von 3 bis 9, bei welcher die Blockiermittel aus den Scheiben (2, 3) gebildet sind, welche Scheiben (2, 3) gegen die Umdrehung um ihre Achsen blockierbar sind.

14. Vorrichtung nach Patentanspruch 1, bei welcher das Trägerelement (6) mit der Drehwelle (51) der Auswuchtmaschine (50) auf solche Weise zusammenarbeitet, dass das Gewicht des Rades (20, 30) voll und ganz von dem Trägerelement (6) getragen wird.

15. Vorrichtung nach Patentanspruch 14, bei welcher das Trägerelement (6) direkt das freie Ende der Drehwelle (51) im Inneren der Nabe der Felge (30) greift.

16. Vorrichtung nach wenigstens einem der vorstehenden Patentansprüche, bei welcher der Trägerrahmen (11) ein Paar von Ständern (11c) enthält, miteinander verbunden durch einen verschiebbaren Querbalken (11d), welcher den Motor (4, 5) und die Scheiben (2, 3) trägt, die entlang dem Querbalken (11d) verschiebbar sind, und zwar entlang einer Richtung parallel zu der Drehachse (x) mit Hilfe von Trägerarmen (21, 22).

17. Vorrichtung nach Patentanspruch 15, bei welcher der Trägerrahmen (11) einen dritten Ständer (11e) enthält, welcher die Drehmittel (6, 7, 8) trägt und in einer Richtung parallel zu der Drehachse (x) verschiebbar ist, und zwar entlang von Führungen (11f), welche fest an dem Basisteil (11a) des Rahmens (11) gehalten sind.

## Revendications

1. Dispositif pour le positionnement angulaire relatif entre une jante et un pneu, comprenant:
- au moins un outil de détalonnage (2, 3, 4, 5), prédisposé pour détalonner le pneumatique (20) de la jante (30);
- des moyens de rotation (6, 7, 8), prédisposés pour causer une relative rotation entre la jante (30) et le pneumatique (20) autour d'un axe de rotation (x);
- des moyens de blocage, prédisposés pour bloquer soit le pneumatique (20) soit la jante (30) en rotation autour d'un axe de rotation (x);
**caractérisé en ce que** l'au moins un outil de détalonnage (2, 3, 4, 5), les moyens de rotation (6, 7, 8) et les moyens de blocage (9, 10) sont supportés par un châssis de support (11) associable à une machine d'équilibrage (50), laquelle machine d'équilibrage (50) étant pourvue d'un arbre rotatif (51) sur lequel la jante (30) peut être fixée, de manière à ce que l'axe de rotation (x) de la jante (30) soit coaxial à l'arbre rotatif (51) de la machine d'équilibrage (50), dans lequel le châssis de support (11) est pourvu de moyens de déplacement et positionnement en relation à la machine d'équilibrage (50) de telle manière à ce que le dispositif (1) puisse être rapproché et éloigné par rapport à la machine d'équilibrage (50).

2. Dispositif selon la revendication 1, **caractérisé en ce que** l'axe de rotation (x) est un axe d'un arbre rotatif d'une machine d'équilibrage.

3. Dispositif selon la revendication 1 ou 2, **caractérisé en ce que** l'au moins un outil de détalonnage comprend une paire de disques (2, 3), chacun étant prédisposé pour être inséré entre un talon du pneumatique (20) et une jante (30).

4. Dispositif selon la revendication 3, **caractérisé en ce que** les disques (2, 3) pivotent autour d'axes inclinés par rapport à l'axe de rotation (x).

5. Dispositif selon au moins l'une des revendications précédentes 3 ou 4, dans lequel les disques (2, 3) sont fous.

6. Dispositif selon au moins l'une des revendications précédentes 3 à 5, dans lequel les disques (2, 3) sont associés à un moteur (4, 5) pouvant faire coulisser les disques (2, 3) entre au moins une position dans laquelle les disques ne sont pas en contact avec le pneumatique (20), et au moins une position dans laquelle les disques sont en contact avec le pneumatique (20).

7. Dispositif selon la revendication 6, dans lequel les disques (2, 3) entrent en contact avec les talons du pneumatique (20).

8. Dispositif selon la revendication 6 ou 7, dans lequel les disques (2, 3) entrent en contact avec les talons du pneumatique (20) en correspondances de zones du pneumatique (20) qui sont alignées le long d'une direction parallèle à l'axe de rotation (x).

9. Dispositif selon la revendication 1, dans lequel les moyens de rotation comprennent un élément de support (6) prédisposé pour être associé à la jante (30) coaxialement à l'axe de rotation (x); un élément d'engagement (7), prédisposé pour être engagé sur la jante (30) en rotation autour de l'axe de rotation (x); un actionneur rotatif (8), mécaniquement associé à l'élément d'engagement (7).

10. Dispositif selon la revendication 1, dans lequel les moyens de blocage comprennent un frein (9, 10) prédisposé pour entrer sur commande en contact avec le pneumatique (20).

11. Dispositif selon la revendication 10, dans lequel le frein (9, 10) comprend une courroie (9) qui en correspondance de l'une de ses extrémités est fixe par rapport au pneumatique (20) et en correspondance d'une autre de ses extrémités est mobile entre une position dans laquelle elle n'est pas en contact avec le pneumatique (20) et une position dans laquelle au moins une portion de la courroie (9) est en contact avec une bande de roulement du pneumatique (20).

12. Dispositif selon la revendication 10, dans lequel le frein (9, 10) comprend un levier (10), pourvu d'une extrémité de freinage (10a), lequel levier (10) oscille autour d'un pivot fixe (11) et entre une position dans laquelle l'extrémité de freinage (10a) n'est pas en contact avec la bande de roulement du pneumatique et une position dans laquelle l'extrémité de freinage (10a) est en contact avec la bande de roulement du pneumatique (20).

13. Dispositif selon au moins l'une des revendications 3 à 9, dans lequel les moyens de blocage sont constitués des disques (2, 3), lesquels disques (2, 3) sont blocables en rotation autour de leurs axes.

14. Dispositif selon la revendication 1, dans lequel l'élément de support (6) coopère avec l'arbre rotatif (51) de la machine d'équilibrage (50) de manière à ce que le poids de la roue (20, 30) soit entièrement supporté par l'élément de support (6).

15. Dispositif selon la revendication 14, dans lequel l'élément de support (6) engage directement l'extrémité libre de l'arbre rotatif (51), intérieurement au moyeu de la jante (30).

16. Dispositif selon au moins l'une des revendications précédentes, dans lequel le châssis de support (11) comprend une paire de montants (11c), joints entre eux par une barre transversale de coulissement (11d), qui supportent le moteur (4, 5) et les disques (2, 3) qui peuvent coulisser le long de la barre transversale (11d) le long d'une direction parallèle à l'axe de rotation (x) au moyen de bras de support (21, 22).

17. Dispositif selon la revendication 15, dans lequel le châssis de support (11) comprend un troisième montant (11e) qui supporte les moyens de rotation (6, 7, 8) et peut coulisser dans une direction parallèle à l'axe de rotation (x) le long de guides (11f) qui sont solidaires de la portion de base (11a) du châssis (11).
